# EUROPEAN PATENT APPLICATION

(11) **EP 4 844 783 A1**
(43) Date of publication of application: **25.11.2026**
(21) Application number: 25751174.1
(22) Date of filing: 21.01.2025
(51) Int. Cl.: G21C 17/00

(54) **REACTOR CONTROL METHOD AND APPARATUS, AND COMPUTER DEVICE AND STORAGE MEDIUM**

(30) Priority: 05.02.2024 CN 202410165667
(71) Applicant: Ling Ao Nuclear Power Co., Ltd, Shenzhen, Guangdong 518000 (CN); China Nuclear Power Technology Research Institute Co., Ltd., Shenzhen, Guangdong 518031 (CN); Guangxi Fangchenggang Nuclear Power Co., Ltd., Fangchenggang, Guangxi 538001 (CN); CGN Power Co., Ltd., Shenzen, Guangdong 518028 (CN)
(72) Inventor: LIN, Jun, Shenzhen, Guangdong 518031 (CN); LI, Zhijun, Shenzhen, Guangdong 518031 (CN); LI, Jinggang, Shenzhen, Guangdong 518031 (CN); LI, Wen, Shenzhen, Guangdong 518031 (CN); LI, Xianjun, Shenzhen, Guangdong 518031 (CN); GUO, Jian, Shenzhen, Guangdong 518031 (CN); WANG, Xinxin, Shenzhen, Guangdong 518031 (CN); CHEN, Jun, Shenzhen, Guangdong 518031 (CN); ZHAO, Changyou, Shenzhen, Guangdong 518031 (CN); LI, Wei, Shenzhen, Guangdong 518031 (CN); HE, Mingtao, Shenzhen, Guangdong 518031 (CN); LU, Haoliang, Shenzhen, Guangdong 518031 (CN); YI, Lin, Shenzhen, Guangdong 518031 (CN); WEI, Jinfeng, Shenzhen, Guangdong 518031 (CN); LI, Yongxin, Shenzhen, Guangdong 518031 (CN); LI, Guoren, Shenzhen, Guangdong 518031 (CN); LIU, Kangning, Shenzhen, Guangdong 518031 (CN); YANG, Yuying, Shenzhen, Guangdong 518031 (CN); HUANG, Weijie, Shenzhen, Guangdong 518031 (CN)
(74) Representative: Zacco Sweden AB
(86) International application number: PCT/CN2025/073514
(87) International publication number: WO 2025/167572

(57) **Abstract**

The present application relates to a reactor control method and apparatus, and a computer device, a storage medium and a computer program product. The method comprises: selecting a first target control rod, a second target control rod and remaining control rods from among all control rods; controlling the second target control rod and the remaining control rods to change from an inserted-rod position to a withdrawn-rod position, acquiring a detector counting rate corresponding to the first target control rod being at the inserted-rod position, controlling the first target control rod to change to the withdrawn-rod position, and acquiring the all-rod-out counting rate of a reactor; performing the following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position; then controlling the second target control rod to change to the inserted-rod position, and acquiring a detector counting rate corresponding to the second target control rod being at the inserted-rod position; and performing statistical analysis on the all-rod-out counting rate and the detector counting rates that respectively correspond to the control rods, and determining the control rod worth of the reactor. In this way, the efficiency of measurement can be improved.

## Description

### CROSS-REFERENCE TO RELATED APPLICATIONS

The present application claims priority to Chinese Patent Application No. 2024101656670, filed with the China National Intellectual Property Administration on February 5, 2024, and entitled "REACTOR CONTROL METHOD AND APPARATUS, AND COMPUTER DEVICE AND STORAGE MEDIUM", which is incorporated herein by reference in its entirety.

### TECHNICAL FIELD

The present application relates to the technical field of reactor start-up physical testing, and in particular to a reactor control method, an apparatus, a computer device, a storage medium, and a computer program product.

### BACKGROUND

With the development of the technical field of reactor start-up physical testing, reactor control methods have emerged, which can achieve measurement of control rod worth before the reactor reaches criticality. The control rod worth is determined through the change in counting rates of a source range detector between an inserted state and a withdrawn state of the control rod in a subcritical state, which can save the time required for reactor start-up, thereby improving unit economy.

To reduce the interference effect between control rods and simultaneously improve the accuracy of measurement, it is generally necessary to construct core states of all-rod-out and target control rod insertion with other control rods fully withdrawn respectively in a subcritical state to determine the control rod worth. There are no corresponding control rod states in conventional start-up physical tests. If a specialized test window needs to be applied for during the start-up process to carry out the test, it will result in time occupation and a decrease in method economy.

### SUMMARY

According to various embodiments of the present application, a reactor control method, an apparatus, a computer device, a computer-readable storage medium, and a computer program product are provided, which can improve experimental efficiency.

In a first aspect, the present application provides a reactor control method. The method includes:
in an initial state, selecting from all control rods of a reactor, a first target control rod, a second target control rod, and remaining control rods other than the first target control rod and the second target control rod, wherein the initial state includes: the reactor being in a hot shutdown state and all of the control rods being in an inserted-rod position;
controlling the second target control rod and each of the remaining control rods to change from the inserted-rod position to a withdrawn-rod position, and acquiring a detector counting rate corresponding to the first target control rod being at the inserted-rod position;
controlling the first target control rod to change to the withdrawn-rod position, and acquiring an all-rod-out counting rate of the reactor;
performing following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position;
controlling the second target control rod to change to the inserted-rod position, and acquiring a detector counting rate corresponding to the second target control rod being at the inserted-rod position; and
performing statistical analysis on the all-rod-out counting rate and detector counting rates respectively corresponding to the control rods, to determine control rod worth of the reactor.

In an embodiment, controlling the second target control rod and each of the remaining control rods to change from the inserted-rod position to the withdrawn-rod position includes:
determining a plurality of power control rods belonging to a power rod group from the second target control rod and the remaining control rods; and
for each of the power control rods in a same power rod group, changing each of the power control rods from the inserted-rod position to the withdrawn-rod position by an alternately withdrawing overlapping-step manner.

In an embodiment, acquiring the detector counting rate corresponding to the first target control rod being at the inserted-rod position includes:
acquiring a first counting rate of a source range detector at a current moment and a second counting rate at a historical moment; and
in a case where a statistical value from the first counting rate and the second counting rate satisfies a stability condition, determining the first counting rate as the detector counting rate corresponding to the first target control rod being at the inserted-rod position.

In an embodiment, the initial state further includes a core boron concentration of the reactor being within a preset range, and
the method further includes: controlling the second target control rod to change from the inserted-rod position to a regulating rod position, and maintaining the first target control rod and each of the remaining control rods in the withdrawn-rod position, wherein the regulating rod position is a state where the control rod is partially inserted; and
performing an adjustment step, the adjustment step including: performing boron concentration dilution on the reactor; and after the reactor satisfies a preset dilution-stopping criterion, continuously changing a rod position of the second target control rod along a direction from the regulating rod position to the withdrawn-rod position until the reactor reaches a critical state, and stopping changing the rod position of the second target control rod.

In an embodiment, the reactor control method further includes:
if the second target control rod has been withdrawn from the regulating rod position to the withdrawn-rod position and the reactor still has not reached the critical state, controlling the second target control rod to change to the regulating rod position, and repeating the adjustment step until the reactor reaches the critical state.

In an embodiment, the reactor control method further includes:
determining withdrawal and insertion parameters of the control rod that has undergone a rod position change; and
performing statistical analysis on each of the withdrawal and insertion parameters of a same control rod, to complete a withdrawal and insertion performance verification test of the control rod.

In a second aspect, the present application provides a reactor control apparatus. The apparatus includes:
a control rod selection module, configured to: in an initial state, select from all control rods of a reactor, a first target control rod, a second target control rod, and remaining control rods other than the first target control rod and the second target control rod, wherein the initial state includes: the reactor being in a hot shutdown state and all of the control rods being in an inserted-rod position;
a detector counting rate determination module, configured to control the second target control rod and each of the remaining control rods to change from the inserted-rod position to a withdrawn-rod position, and acquire a detector counting rate corresponding to the first target control rod being at the inserted-rod position;
an all-rod-out counting rate determination module, configured to control the first target control rod to change to the withdrawn-rod position, and acquire an all-rod-out counting rate of the reactor;
a remaining control rod execution module, configured to perform following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position;
the detector counting rate determination module, further configured to control the second target control rod to change to the inserted-rod position, and acquire a detector counting rate corresponding to the second target control rod being at the inserted-rod position; and
a control rod worth determination module, configured to perform statistical analysis on the all-rod-out counting rate and detector counting rates respectively corresponding to the control rods, to determine control rod worth of the reactor.

In an embodiment, the detector counting rate determination module is configured to:
determine a plurality of power control rods belonging to a power rod group from the second target control rod and the remaining control rods; and
for each of the power control rods in a same power rod group, change each of the power control rods from the inserted-rod position to the withdrawn-rod position by an alternately withdrawing overlapping-step manner.

In an embodiment, the detector counting rate determination module is further configured to:
acquire a first counting rate of a source range detector at a current moment and a second counting rate at a historical moment; and
in a case where a statistical value from the first counting rate and the second counting rate satisfies a stability condition, determine the first counting rate as the detector counting rate corresponding to the first target control rod being at the inserted-rod position.

In an embodiment, the initial state further includes a core boron concentration of the reactor being within a preset range, and
the apparatus further includes a reactor criticality-reaching test module, configured to:
control the second target control rod to change from the inserted-rod position to a regulating rod position, and maintain the first target control rod and each of the remaining control rods in the withdrawn-rod position, wherein the regulating rod position is a state where the control rod is partially inserted; and
perform an adjustment step, the adjustment step including: performing boron concentration dilution on the reactor; and after the reactor satisfies a preset dilution-stopping criterion, continuously changing a rod position of the second target control rod along a direction from the regulating rod position to the withdrawn-rod position until the reactor reaches a critical state, and stopping changing the rod position of the second target control rod.

In an embodiment, the apparatus further includes: an adjustment step repetitive execution module, configured to:
if the second target control rod has been withdrawn from the regulating rod position to the withdrawn-rod position and the reactor still has not reached the critical state, control the second target control rod to change to the regulating rod position, and repeat the adjustment step until the reactor reaches the critical state.

In an embodiment, the apparatus further includes: a withdrawal and insertion performance determination module, configured to:
determine withdrawal and insertion parameters of the control rod that has undergone a rod position change; and
perform statistical analysis on each of the withdrawal and insertion parameters of a same control rod, to complete a withdrawal and insertion performance verification test of the control rod.

In a third aspect, the present application provides a computer device. The computer device includes a memory and a processor, the memory having a computer program stored therein, wherein when the processor executes the computer program, steps of the above method are implemented.

In a fourth aspect, the present application provides a computer-readable storage medium. The computer-readable storage medium has a computer program stored therein, wherein when a processor executes the computer program, steps of the above method are implemented.

In a fifth aspect, the present application provides a computer program product. The computer program product includes a computer program, wherein when a processor executes the computer program, steps of the above method are implemented.

Details of one or more embodiments of the present application are set forth in the accompanying drawings and the description below. Other features, objects, and advantages of the present application will become apparent from specification, drawings, and claims.

### BRIEF DESCRIPTION OF THE DRAWINGS

FIG. 1 is an application environment view of a reactor control method in an embodiment.
FIG. 2 is a schematic flowchart of a reactor control method in an embodiment.
FIG. 3 is a schematic flowchart of reactor control steps in an embodiment.
FIG. 4 is a schematic flowchart of the reactor control method in another embodiment.
FIG. 5 is a structural block view of a reactor control apparatus in an embodiment.
FIG. 6 is an internal structural view of a computer device in an embodiment.

### DETAILED DESCRIPTION

The technical solutions in the embodiments of the present application will be described clearly in detail below in conjunction with the drawings in the embodiments of the present application. Apparently, the described embodiments are only a part of the embodiments of the present application, rather than all the embodiments. All other embodiments obtained by those of ordinary skill in the art based on the embodiments in the present application without any creative effort are within the scope of protection of the present application.

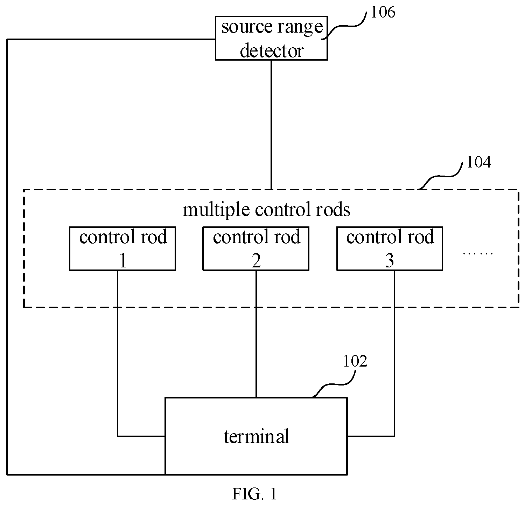

The reactor control method provided by the embodiments of the present application can be applied to an application environment shown in FIG. 1. A terminal 102 communicates through a network with multiple control rods 104 and a source range detector 106. The terminal 102 can be but is not limited to, various personal computers, laptop computers, smartphones, tablets, Internet of Things devices, and portable wearable devices. The Internet of Things devices can be smart speakers, smart TVs, smart air conditioners, smart car devices, etc. The source range detector 106 is configured to detect the counting rate of the reactor. During the process of the terminal 102 controlling the reactor, in an initial state, a first target control rod, a second target control rod, and remaining control rods other than the first target control rod and the second target control rod are selected from among all control rods 104 of the reactor; wherein the initial state includes: the reactor being in a hot shutdown state and all of the control rods being in an inserted-rod position; controlling the second target control rod and each of the remaining control rods to change from the inserted-rod position to a withdrawn-rod position, and acquiring a detector counting rate corresponding to the first target control rod being at the inserted-rod position detected by the source range detector 106; controlling the first target control rod to change to a withdrawn-rod position, and acquiring an all-rod-out counting rate of the reactor detected by the source range detector 106; performing the following steps on each of the remaining control rods: controlling the remaining control rod to change to an inserted-rod position, acquiring a detector counting rate corresponding to the remaining control rod being at the inserted-rod position detected by the source range detector 106, and controlling the remaining control rod to change from the inserted-rod position to the withdrawn-rod position; controlling the second target control rod to change to an inserted-rod position, and acquiring a detector counting rate corresponding to the second target control rod being at the inserted-rod position detected by the source range detector 106; performing statistical analysis on the all-rod-out counting rate and detector counting rates respectively corresponding to the control rods, to determine control rod worth of the reactor.

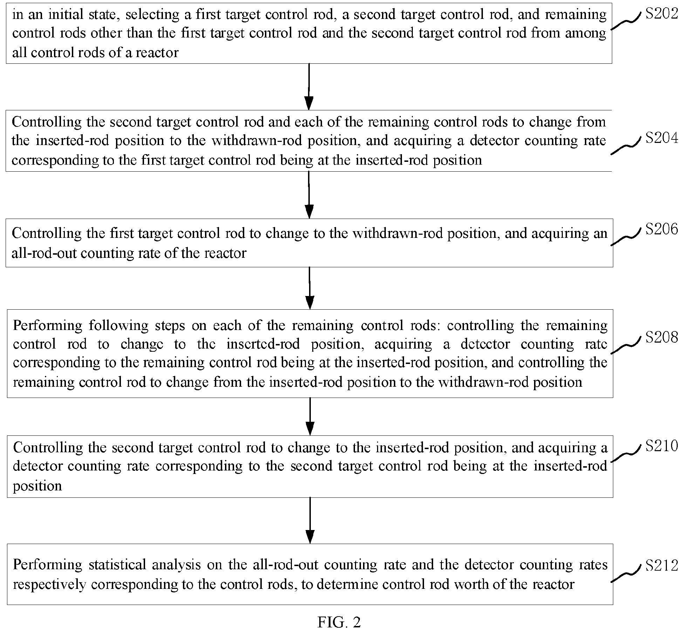

In an embodiment, as shown in FIG. 2, a reactor control method is provided, taking the method as applied to the terminal in FIG. 1 as an example for description, which includes the following steps:
Step S202: In an initial state, selecting, from all control rods of a reactor, a first target control rod, a second target control rod, and remaining control rods other than the first target control rod and the second target control rod, wherein the initial state includes the reactor being in a hot shutdown state and all of the control rods being in an inserted-rod position.

A reactor, also referred to as an atomic energy reactor or a nuclear reactor, is a device capable of maintaining a controlled self-sustaining chain nuclear fission reaction to achieve utilization of nuclear energy. A reactor achieves a self-sustaining chain nuclear fission process therein through rational arrangement of nuclear fuel, without the need for an additional neutron source. Strictly speaking, the term "reactor" should cover fission reactors, fusion reactors, and fission-fusion hybrid reactors, but generally only refers to fission reactors. The inserted-rod position refers to a state where the rod position of the control rod is at step 5.

To control the rate of the chain reaction at a predetermined level, absorption rods made of neutron-absorbing materials are required, which are called control rods. Control rods are configured to compensate for fuel consumption and regulate the reaction rate. Absorber materials generally include boron, boron carbide, cadmium, silver-indium-cadmium, etc. The first target control rod or the second target control rod is one control rod selected from among multiple control rods. All control rods can be selected as the first target control rod or the second target control rod; and the remaining control rods are control rods other than the first target control rod or the second target control rod. When the first target control rod or the second target control rod is different, the corresponding remaining control rods are also different. When the reactor is not in operation, the control rods are inserted in the reactor core. When the reactor starts, the control rods are withdrawn, and the heights of the control rods are adjusted as needed during operation. Once an accident occurs, all control rods will automatically and rapidly drop to stop the chain fission reaction in the reactor.

Hot shutdown is a short-term shutdown, in which control rods are inserted into the core to make the reactor subcritical, the boron concentration is greater than the minimum shutdown margin boron concentration, and the reactor is in a subcritical state (< 0.99). Subcritical state refers to a state where, after the first fuel loading of the reactor is completed, all control rods are at the position fully inserted into the core, the primary coolant contains a high concentration of boron, and neutrons are almost entirely absorbed. At this time, the neutron generation rate is less than the neutron disappearance rate, the core is in a subcritical state, and specifically, it is in a deep subcritical state.

The control rod worth measurement process can be performed during the reactor start-up process, i.e., the process from when the reactor is in the hot shutdown state and all control rods included in the reactor are in the inserted-rod position until the reactor reaches criticality. Combining the measurement of the control rod worth with the reactor start-up can minimize the time required for measurement. Since measuring the control rod worth requires constructing a core state of all rod out (ARO) and a core state where a target control rod is inserted while other control rods are fully withdrawn, first, it is necessary to select a first target control rod and a second target control rod from among the control rods in a case where the reactor is in a hot shutdown state and all control rods are in the inserted-rod position. Then, the control rods other than the first target control rod and the second target control rod are the remaining control rods, which facilitates first constructing the core state where the first target control rod is inserted and the remaining control rods are all withdrawn. It can be understood that the selection of the first target control rod or the second target control rod is variable. For example, for the temperature control rod R, power control rods G1, G2, N1, and N2, and shutdown rods SA, SB, SC, and SD, the SA control rod can be first determined as the first target control rod, and the R control rod as the second target control rod, then G1, G2, N1, N2, SB, SC, and SD are the remaining control rods. It is also possible to select the R control rod as the first target control rod and the SA control rod as the second target control rod, then G1, G2, N1, N2, SB, SC, and SD are the remaining control rods. In an embodiment, the first target control rod and the second target control rod can be selected according to the types of control rods, and control rods other than the first target control rod and the second target control rod are defined as the remaining control rods. In another embodiment, the first target control rod and the second target control rod can also be selected according to an arrangement order of the control rods, and control rods other than the first target control rod and the second target control rod are defined as the remaining control rods.

Step S204: Controlling the second target control rod and each of the remaining control rods to change from the inserted-rod position to a withdrawn-rod position, and acquiring a detector counting rate corresponding to the first target control rod being at the inserted-rod position.

Each of the remaining control rods is controlled to change from the inserted-rod position to the withdrawn-rod position.

The withdrawn-rod position refers to a state where the rod position of the control rod is at step 225. The detector counting rate refers to a counting rate detected by the source range detector that reflects the neutron flux level of the reactor core.

When all the control rods in the reactor are located at the inserted-rod position, the second target control rod and each of the remaining control rods can be controlled to change from the inserted-rod position to the withdrawn-rod position. At this time, the first target control rod is still located at the inserted-rod position, which can construct the core state where the first target control rod is inserted and other control rods are all withdrawn. For example, during the process of controlling the second target control rod and each of the remaining control rods to change from the inserted-rod position to the withdrawn-rod position, all control rod groups can be sequentially withdrawn to the withdrawn-rod position in the order of R, SB, SC, SD, N2, N1, G2, and G1 control rods, wherein N2, N1, G2, and G1 control rods are withdrawn in an overlap-step manner. Further, the process of controlling the second target control rod and each of the remaining control rods to change from the inserted-rod position to the withdrawn-rod position can be executed by the terminal, or can be performed manually by technical personnel. In a case where the first target control rod is maintained at the inserted-rod position, the core state of the reactor is the core state where the first target control rod is inserted and other control rods are all withdrawn, achieving the target state; thus, the detector counting rate corresponding to the first target control rod being at the inserted-rod position can be acquired, and the control rod worth of the first target control rod can be determined according to the detector counting rate. It can be understood that the process of acquiring the detector counting rate of the first target control rod can be active acquisition or passive reception.

Step S206: Controlling the first target control rod to change to the withdrawn-rod position, and acquiring an all-rod-out counting rate of the reactor.

The all-rod-out counting rate refers to a detector counting rate of the reactor detected by the source range detector when all of the multiple control rods of the reactor are located at the withdrawn-rod position.

Before the first target control rod changes to the withdrawn-rod position, the first target control rod is at the inserted-rod position and other control rods are at the withdrawn-rod position. Thus, the ARO core state can be constructed by simply changing the first target control rod to the withdrawn-rod position. Therefore, in a case where the first target control rod changes to the withdrawn-rod position, the core of the reactor is currently in the ARO core state; and by acquiring the all-rod-out counting rate of the reactor, the detector counting rate in the ARO core state can be obtained. It should be noted that multiple ARO states may exist during the subcritical rod calibration process, and the counting rate of one of the states can be selected for calculation as needed.

Step S208: Performing following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position.

Before performing the steps on each of the remaining control rods, detector counting rates of two core states have been measured, including the detector counting rate corresponding to the first target control rod being at the withdrawn-rod position while other control rods are at the inserted-rod position, and the all-rod-out counting rate. It is also necessary to acquire detector counting rates of the reactor when each of the remaining control rods is at the withdrawn-rod position and when the second target control rod is at the withdrawn-rod position. Then, for each remaining control rod, it is also necessary to perform statistics on the detector counting rate corresponding to the remaining control rod being at the withdrawn-rod position while other control rods are at the inserted-rod position. That is, it is necessary to control the remaining control rod to change to the inserted-rod position and acquire the detector counting rate corresponding to the remaining control rod being at the inserted-rod position. Since the steps executed for each remaining detector are the same, and only one control rod is at the inserted-rod position each time a detector counting rate is acquired, it is necessary to control the remaining rod to change from the inserted-rod position to the withdrawn-rod position after acquiring the detector counting rate corresponding to the remaining control rod being at the inserted-rod position.

Step S210: Controlling the second target control rod to change to the inserted-rod position, and acquiring a detector counting rate corresponding to the second target control rod being at the inserted-rod position.

The second target control rod serves as the last control rod to change its rod position state to the inserted-rod position among all control rods of the reactor.

Before the second target control rod is controlled to change to the inserted-rod position, only one core state required for the control rod worth measurement process remains, i.e., the core state where the second target control rod is at the inserted-rod position and other control rods are at the withdrawn-rod position. Thus, the second target control rod can be controlled to change to the inserted-rod position to acquire the detector counting rate corresponding to the second target control rod being at the inserted-rod position, thereby acquiring the detector counting rates for all required core states.

Step S212: Performing statistical analysis on the all-rod-out counting rate and detector counting rates respectively corresponding to the control rods, to determine control rod worth of the reactor.

The control rod worth refers to an absolute value of the reactivity change caused by the core of the reactor after a control rod at a withdrawn-rod position is rapidly inserted into the inserted-rod position under given conditions. The control rod worth of the reactor covers the control rod worth in the ARO core state and the core states where each target control rod is inserted and other control rods are all withdrawn.

By using pre-calculated correction factors to correct each counting rate detected by the source range detector, the control rod worth corresponding to each counting rate can be determined. After acquiring the detector counting rate corresponding to the second target control rod being at the inserted-rod position, statistical analysis is performed on the all-rod-out counting rate and detector counting rates respectively corresponding to the control rods based on the correction factors to determine the control rod worth of the reactor.

In the above-mentioned reactor control method, in an initial state, a first target control rod, a second target control rod, and remaining control rods other than the first target control rod and the second target control rod are selected from all control rods of a reactor; wherein the initial state includes: the reactor being in a hot shutdown state and all of the control rods being in an inserted-rod position; the second target control rod and each of the remaining control rods are controlled to change from the inserted-rod position to the withdrawn-rod position, and a detector counting rate corresponding to the first target control rod being at the inserted-rod position is acquired, so that the detector counting rate in the core state where the first target control rod is inserted and other control rods are all withdrawn can be obtained. Thereafter, the first target control rod is controlled to change to the withdrawn-rod position, and the all-rod-out counting rate of the reactor is acquired. Next, the following steps are performed on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position. It can be understood that the steps performed for each remaining control rod are a repetitive process, the purpose of which is to measure the detector counting rates of multiple core states where each of the remaining control rods is located at the inserted-rod position and other control rods other than the measured remaining control rod are located at the withdrawn-rod position. After the above steps are completed, all control rods in the reactor are located at the withdrawn-rod position. At this time, the second target control rod is controlled to change to the inserted-rod position, and the detector counting rate corresponding to the second target control rod being at the inserted-rod position is acquired, so that the detector counting rates for all core states required for control rod worth measurement can be obtained. Compared with the method of first withdrawing all control rod groups and then performing insertion and withdrawal for the first control rod group, a repetitive operation of insertion and withdrawal is omitted. Moreover, at this time, the control rod state of the reactor is such that the second target control rod is located at the inserted-rod position and other control rods are located at the withdrawn-rod position, which happens to be the initial state for the reactor criticality experiment, facilitating the subsequent process of the reactor criticality experiment. Finally, statistical analysis is performed on the all-rod-out counting rate and detector counting rates respectively corresponding to the control rods to determine the control rod worth of the reactor, which can improve experimental efficiency.

In an embodiment, the controlling the second target control rod and each of the remaining control rods to change from the inserted-rod position to the withdrawn-rod position includes: determining a plurality of power control rods belonging to a power rod group from the second target control rod and the remaining control rods; and for each of the power control rods in the same power rod group, changing each of the power control rods from the inserted-rod position to the withdrawn-rod position by an alternately withdrawing overlapping-step manner.

The overlap-step manner refers to a case where, when there is an overlapping part between one control rod and another control rod, the other control rod can be withdrawn along with the first control rod when it is withdrawn to a certain rod position. That is, within the overlap-step zone of the overlapping part, the actions of different control rod groups are consistent, also called "all move when one moves, none move when one doesn't".

Since there may be more than one power control rod in a power rod group in a reactor, a plurality of power control rods belonging to a power rod group from the second target control rod and the remaining control rods can be first determined; and then for each power control rod in the power rod group, each of the power control rods is changed from the inserted-rod position to the withdrawn-rod position by an alternately withdrawing overlapping-step manner. For example, assuming that the power rod groups in the current reactor include the G1 rod group, G2 rod group, N1 rod group, and N2 rod group, then for each control rod in each power rod group, each of the power control rods must be changed from the inserted-rod position to the withdrawn-rod position by an alternately withdrawing overlapping-step manner.

In the present embodiment, for the plurality of control rods belonging to the power rod group among the second target control rod and the remaining control rods, the power rod groups will be divided. For each control rod in each power rod group, each of the power control rods is changed from the inserted-rod position to the withdrawn-rod position by an alternately withdrawing overlapping-step manner, which can introduce reactivity while reducing the impact on the axial power distribution shape.

In an embodiment, the acquiring the detector counting rate corresponding to the first target control rod being at the inserted-rod position includes: acquiring a first counting rate of a source range detector at a current moment and a second counting rate at a historical moment; and in a case where a statistical value from the first counting rate and the second counting rate satisfies a stability condition, determining the first counting rate as the detector counting rate corresponding to the first target control rod being at the inserted-rod position.

The historical moment refers to a moment that has already passed relative to the current moment. The historical moment can refer to the moment immediately preceding the current moment, or refer to multiple moments preceding the current moment. The second counting rate can refer to a detector counting rate of the preceding moment, or refer to an average value of the detector counting rates of multiple preceding moments. The statistical value of the first counting rate and the second counting rate can be, for example, a difference between the first counting rate and the second counting rate. The stability condition refers to a range where the statistical value of the first counting rate and the second counting rate reaches a stable value; for example, in a case where the statistical value is a difference, the stability condition can be that the difference between the first counting rate and the second counting rate is less than a set value.

To ensure that the detector counting rate is accurate enough, it is necessary to ensure that the data of the counting rate detected by the source range detector is stable. By acquiring the first counting rate of the source range detector at the current moment and the second counting rate at a historical moment, numerical stability determination can be performed on the statistical value between the first counting rate and the second counting rate. In a case where the statistical value of the first counting rate and the second counting rate satisfies the stability condition, the first counting rate is determined as the detector counting rate corresponding to the first target control rod being at the inserted-rod position. In an embodiment, the second counting rate refers to respective detector counting rates of multiple moments; then the first counting rate can be compared with the detector counting rates of the multiple preceding moments, respectively. In a case where the differences between the first counting rate and the detector counting rates of the multiple preceding moments all satisfy a stable difference value, it means that the data of the counting rate detected by the source range detector is stable, and the first counting rate of the current moment can be determined as the detector counting rate corresponding to the first target control rod being at the inserted-rod position. In another embodiment, the second counting rate refers to an average value of respective detector counting rates of multiple preceding moments. In a case where the difference between the first counting rate and the average value of the detector counting rates of the multiple preceding moments satisfies a stable difference value, it means that the data of the counting rate detected by the source range detector is stable, and the first counting rate of the current moment can be determined as the detector counting rate corresponding to the first target control rod being at the inserted-rod position.

In the present embodiment, statistical analysis is performed on the first counting rate of the current moment and the second counting rate of a historical moment, which can ensure that the detector counting rate corresponding to the first target control rod being at the inserted-rod position is determined when the detector counting rate detected by the source range detector is stable, thereby ensuring the accuracy of the control rod worth measurement.

In an embodiment, the initial state further includes a core boron concentration of the reactor being within a preset range, and the reactor control method further includes: controlling the second target control rod to change from the inserted-rod position to a regulating rod position, and maintaining the first target control rod and each of the remaining control rods in the withdrawn-rod position, wherein the regulating rod position is a state where the control rod is partially inserted; performing an adjustment step, the adjustment step including: performing boron concentration dilution on the reactor; and after the reactor satisfies a preset dilution-stopping criterion, continuously changing a rod position of the second target control rod along a direction from the regulating rod position to the withdrawn-rod position until the reactor reaches a critical state, and stopping changing the rod position of the second target control rod.

The regulating rod position is a rod position located between the inserted-rod position and the withdrawn-rod position, which can be, for example, step 170. The method of boron concentration dilution is to introduce water into the primary circuit of the reactor, thereby diluting the boron concentration. The critical state is a state where the number of new neutrons produced by nuclear fission in the reactor core just meets the needs for the reactor to continue fission, and the neutron generation rate is equal to the neutron disappearance rate.

The control rod worth measurement process is basically completed, and at this time, the control rod state at the completion of the control rod worth measurement can be used as the initial control rod state for the first criticality of the reactor. At this time, the state of the control rods is: the second target control rod being at the inserted-rod position and other control rods being at the withdrawn-rod position. It is only necessary to change the second target control rod from the inserted-rod position to the regulating rod position, maintain the first target control rod and each of the remaining control rods at the withdrawn-rod position, and then perform boron concentration dilution on the reactor. When the dilution is close to criticality, the reactor satisfies a preset dilution-stopping criterion; a rod position of the second target control rod is continuously changed along a direction from the regulating rod position to the withdrawn-rod position until the reactor reaches the critical state, and then the change of the rod position of the second target control rod is stopped. In an embodiment, the second target control rod is a temperature control rod; the rod position of the temperature control rod can be changed from the inserted-rod position to the regulating rod position to reduce the worth of the part of the temperature control rod inserted into the core. Based on the detector counting rate of the source range detector and the difference between the measured boron concentration and the theoretical critical boron concentration, reactivity is introduced through rapid, medium, and slow dilution until the dilution-stopping criterion is met. Generally, the dilution-stopping criterion is that the inverse counting rate reaches 0.1 or the deviation between the measured boron concentration and the theoretical critical boron concentration is less than 30 ppm; the temperature regulating rod is lifted until the core is critical. If criticality cannot be reached, the temperature regulating rod is inserted back to the inserted-rod position; after introducing an equivalent amount of reactivity through dilution, the operation of lifting the rod to reach criticality is repeated until the core is critical.

In the present embodiment, the final state of the control rods in the control rod worth measurement process is set as the initial state of the first reactor criticality experiment. Compared with the initial state of the first reactor criticality experiment in the prior art, where the rod positions of both the temperature control rod and the power control rod are at the inserted-rod position and other control rods are at the withdrawn-rod position, the steps of experimental operation are greatly reduced. It is only necessary to change the rod position of the second target control rod from the inserted-rod position to the regulating rod position, whereas the prior art requires changing the rod position of the power control rod from the inserted-rod position to the withdrawn-rod position and changing the rod position of the temperature control rod from the inserted-rod position to the regulating rod position; thus, the method in the present embodiment is more efficient.

In an embodiment, the reactor control method further includes: if the second target control rod has been withdrawn from the regulating rod position to the withdrawn-rod position and the reactor still has not reached the critical state, controlling the second target control rod to change to the regulating rod position, and repeating the adjustment step until the reactor reaches the critical state.

If the second target control rod has been withdrawn from the regulating rod position to the withdrawn-rod position and the reactor still has not reached the critical state, it indicates that the boron concentration in the reactor is still high at this time. At this time, the second target control rod can be changed to the initial position, i.e., the regulating rod position, and the above adjustment step is performed again, i.e., the boron concentration in the reactor is diluted again. After the reactor satisfies the preset dilution-stopping criterion, the operational step of controlling the second target control rod to move from the regulating rod position to the withdrawn-rod position is performed, and whether the reactor reaches the critical state during this process is confirmed again. If the reactor still has not reached the critical state, the above steps are repeated until the reactor reaches the critical state.

In the present embodiment, steps of repeatedly regulating the rod position of the second target control rod and repeatedly diluting the boron concentration are established, which can ensure that the reactor finally reaches the critical state and ensure the normal operation of the reactor control process.

In an embodiment, the reactor control method further includes: determining withdrawal and insertion parameters of the control rod that has undergone a rod position change; and performing statistical analysis on each of the withdrawal and insertion parameters of the same control rod, to complete a withdrawal and insertion performance verification test of the control rod.

The withdrawal and insertion parameters are parameters configured to determine the withdrawal and insertion performance of a control rod, which can be the response speed or withdrawal or insertion time. The faster the response speed of the control rod and the better the withdrawal or insertion time matches the input, the better the withdrawal and insertion performance of the control rod.

During the process of measuring the control rod worth, withdrawal and insertion of the control rods will be performed; therefore, the withdrawal and insertion performance of the control rods can be measured while measuring the control rod worth. The withdrawal and insertion parameters of the control rod that has undergone a rod position change can be determined, and statistical analysis can be performed on each of the withdrawal and insertion parameters of the same control rod, so as to determine the withdrawal and insertion performance of the control rod, thereby completing the withdrawal and insertion performance verification test of the control rod.

In the present embodiment, the control rod worth measurement process and the control rod withdrawal and insertion performance determination process are combined, which can reduce experimental operations and improve measurement efficiency.

In an embodiment, in view of a case where a core state required for achieving the subcritical rod calibration method to measure the control rod worth is not available in the original start-up process of a certain unit, a method for achieving control rod worth measurement under a subcritical state during the reactor start-up process is provided. This method requires the counting rates of the source range detector for the ARO state and for the state where each control rod group is individually fully inserted, while minimizing the impact on the operator's actions and the experimental time during the original unit start-up process.

The original reactor start-up scheme specifically refers to the process from the completion of the control rod drop time measurement test until criticality is reached, mainly including two processes, that is, the control rod withdrawal and insertion performance verification test and the first criticality test. The main contents of the control rod withdrawal and insertion performance verification test of the unit include:

Initial state of test: all control rods are located at the inserted-rod position; the core boron concentration is between 2300 ppm and 2500 ppm; the reactor is in a hot shutdown state.

Test process: In a random order of control rod arrangement, all 9 control rod groups (i.e., R, G1, G2, N1, N2, SA, SB, SC, SD) are respectively subjected to withdrawal and insertion performance verification (step 5 - step 225 - step 5 - step 225). The main contents of the first criticality test of the unit include:

Initial state of test: R, G1, G2, N1, and N2 are located at the inserted-rod position, i.e., at step 5 (in some units, the SA rod is also at step 5); other control rods are located at the withdrawn-rod position, i.e., at step 225; the core boron concentration is between 2300 ppm and 2500 ppm; the reactor is in a hot shutdown state; the primary circuit temperature is stable in a range from 290.4 °C to 293.4 °C, and the pressure is stable in a range from 153 bar to 155 bar.

Test process: Control rods are lifted in the order of shutdown rods (including SA, SB, SC, and SD rods), power control rods (including G1, G2, N1, and N2 rods), and the temperature regulating rod (including the R rod); except for the temperature regulating rod being partially inserted (e.g., inserted to step 170), all other control rod groups are fully withdrawn to step 225; subsequently, the boron concentration and the rod position of the temperature regulating rod are adjusted to make the core to reach the critical state.

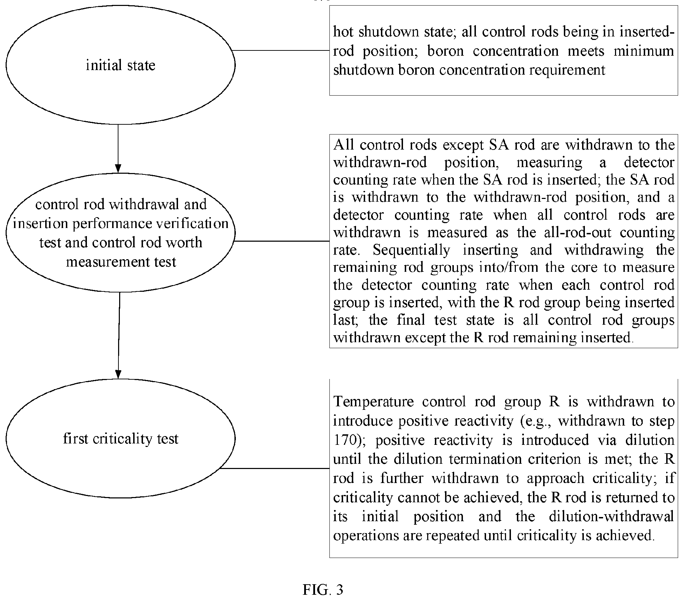

However, in the embodiments of the present application, the process of subcritical rod calibration for measuring the rod worth can be combined with the control rod withdrawal and insertion performance verification test and the first criticality test, minimizing additional operations and time for the subcritical rod calibration test while achieving source range detector counting rate measurements of the target states. The flowchart of the test process is shown in FIG. 3. In an embodiment, in the initial state, i.e., the reactor is in the hot shutdown state, the primary circuit temperature is stable in a range from 290.4 °C to 293.4 °C, the pressure is stable in a range from 153 bar to 155 bar, the core boron concentration is between 2300 ppm and 2500 ppm, and all control rods are located at the inserted-rod position, i.e., step 5; the SA rod is selected as the first target control rod, the R rod is selected as the second target control rod, and the remaining SB, SC, SD, N2, N1, G2, and G1 rods are all used as the remaining control rods. First, following the order of R, SB, SC, SD, N2, N1, G2, and G1 rod groups, the second target control rod and remaining control rod groups are sequentially fully withdrawn to the withdrawn-rod position, i.e., step 225, wherein the G and N rod groups are withdrawn in an overlap-step manner; after all control rods except the SA rod are fully withdrawn, and waiting for the source range detector counting rate to stabilize, data is collected to obtain the detector counting rate corresponding to the SA rod being at the inserted-rod position while other control rods are all withdrawn. After data collection is completed, the SA rod is withdrawn to step 225 with the maximum moving speed, waiting for the source range detector counting rate to stabilize, and data is collected to obtain the all-rod-out counting rate. After data collection is completed, the SB rod is inserted to withdrawal step 5 at the maximum rod speed, waiting for the source range detector counting rate to stabilize, and data is collected to obtain the detector counting rate corresponding to the SB rod being at the inserted-rod position while other control rods are all withdrawn. The above measurement process is repeated to measure the source range detector counting rates when the SC, SD, G1, G2, N1, N2, and R rod groups are inserted. After the measurement of the detector counting rate corresponding to the R rod being at the inserted-rod position (step 5) is completed, the R rod is kept inserted; at this time, the source range detector counting rates in different states required for the subcritical rod calibration method to measure the rod worth have been acquired, and the verification of the control rod withdrawal and insertion performance has been completed.

Since the reactor is currently in the hot shutdown state, the primary circuit temperature is stable in a range from 290.4 °C to 293.4 °C, the pressure is stable in a range from 153 bar to 155 bar, the core boron concentration is between 2300 ppm and 2500 ppm, and except for the R rod being at step 5, other control rods are all withdrawn to step 225, satisfying the initial state of the test for performing the first criticality test; therefore, the first criticality test can be directly started at this time.

The first criticality test process includes: lifting the temperature control rod (i.e., the R rod) to the regulating rod position to reduce the worth of the portion of the temperature regulating rod inserted into the core (e.g., withdrawing to step 170). Subsequently, based on the inverse counting rate of the source range detector and the difference between the measured boron concentration and the theoretical critical boron concentration, reactivity is introduced through rapid, medium, and slow dilution until the dilution-stopping criterion is met, wherein generally, when the inverse counting rate reaches 0.1 or the deviation between the measured boron concentration and the theoretical critical boron concentration is less than 30 ppm, it is considered that the dilution-stopping criterion is met at this time. After the dilution-stopping criterion is met, the temperature regulating rod is lifted until the core reaches the critical state; if criticality cannot be reached, the temperature regulating rod is inserted back to the initial position, an equivalent amount of reactivity is again introduced through dilution, and then the operation of lifting the rod to reach criticality is repeated until the core reaches the critical state.

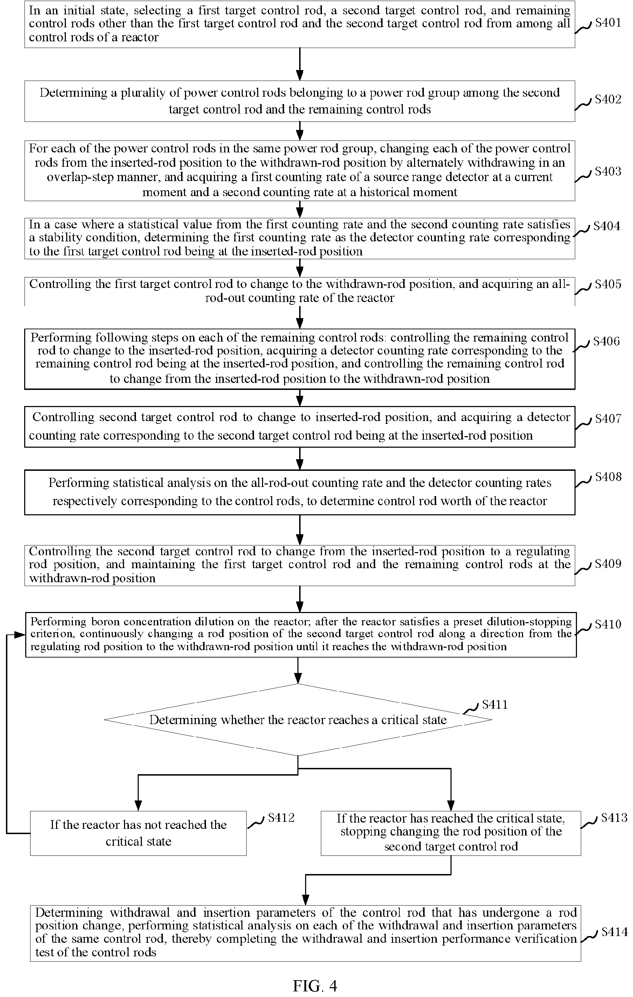

In an embodiment, as shown in FIG. 4, the reactor control method includes:
Step S401: In an initial state, selecting from all control rods of a reactor, a first target control rod, a second target control rod, and remaining control rods other than the first target control rod and the second target control rod;
wherein the initial state includes: the reactor being in a hot shutdown state and all of the control rods being in an inserted-rod position;
Step S402: Determining a plurality of power control rods belonging to a power rod group from the second target control rod and the remaining control rods;
Step S403: For each of the power control rods in the same power rod group, changing each of the power control rods from the inserted-rod position to the withdrawn-rod position by an alternately withdrawing overlapping-step manner, and acquiring a first counting rate of a source range detector at a current moment and a second counting rate at a historical moment;
Step S404: In a case where a statistical value from the first counting rate and the second counting rate satisfies a stability condition, determining the first counting rate as the detector counting rate corresponding to the first target control rod being at the inserted-rod position;
Step S405: Controlling the first target control rod to change to the withdrawn-rod position, and acquiring an all-rod-out counting rate of the reactor;
Step S406: Performing following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position;
Step S407: Controlling the second target control rod to change to the inserted-rod position, and acquiring a detector counting rate corresponding to the second target control rod being at the inserted-rod position;
Step S408: Performing statistical analysis on the all-rod-out counting rate and detector counting rates respectively corresponding to the control rods, to determine control rod worth of the reactor;
wherein the initial state further includes the core boron concentration of the reactor being within a preset range;
Step S409: Controlling the second target control rod to change from the inserted-rod position to a regulating rod position, and maintaining the first target control rod and the remaining control rods at the withdrawn-rod position;
wherein the regulating rod position is a state where the control rod is partially inserted;
Step S410: Performing boron concentration dilution on the reactor; after the reactor satisfies a preset dilution-stopping criterion, continuously changing a rod position of the second target control rod along a direction from the regulating rod position to the withdrawn-rod position until it reaches the withdrawn-rod position;
Step S411: Determining whether the reactor reaches a critical state;
Step S412: If the reactor has not reached the critical state, returning to step S410;
Step S413: If the reactor has reached the critical state, stopping changing the rod position of the second target control rod;
Step S414: Determining withdrawal and insertion parameters of the control rod that has undergone a rod position change, performing statistical analysis on each of the withdrawal and insertion parameters of the same control rod, thereby completing the withdrawal and insertion performance verification test of the control rods.

It should be understood that, although the respective steps in the flowcharts involved in the various embodiments described above are displayed sequentially in the direction of the arrows, these steps are not necessarily performed sequentially in the order indicated by the arrows. Unless explicitly described herein, there is no strict sequential limitation on the execution of these steps, and these steps can be performed in other orders. Moreover, at least some of the steps in the flowcharts involved in the various embodiments described above can include multiple steps or multiple stages, and these steps or stages are not necessarily completed at the same moment, but can be performed at different moments. The execution order of these steps or stages is also not necessarily sequential, but they can be performed alternately or in turn with other steps or at least a portion of steps or stages of the other steps.

Based on the same inventive concept, an embodiment of the present application further provides a reactor control apparatus for implementing the reactor control method described above. The implementation solution provided by the apparatus for solving the problem is similar to the implementation solution described in the above method. Therefore, the limitations in one or more embodiments of the reactor control apparatus provided below can be referred to the limitations of the reactor control method described above, which will not be repeated herein.

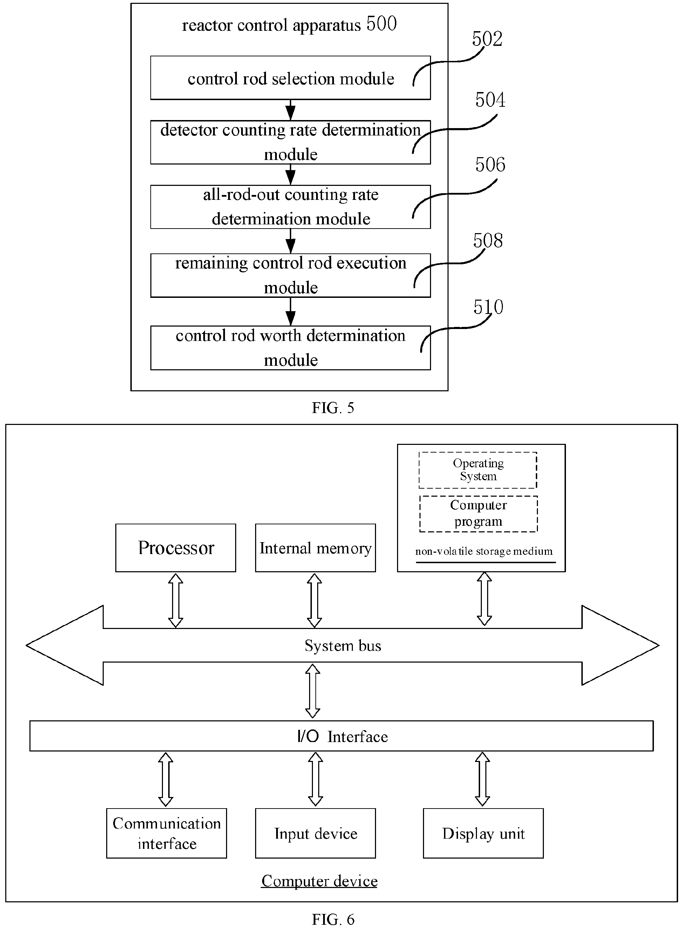

In an embodiment, as shown in FIG. 5, a reactor control apparatus is provided, which includes: a control rod selection module 502, a detector counting rate determination module 504, an all-rod-out counting rate determination module 506, a remaining control rod execution module 508, and a control rod worth determination module 510.

The control rod selection module 502 is configured to: in an initial state, select from all control rods of a reactor, a first target control rod, a second target control rod, and remaining control rods other than the first target control rod and the second target control rod; wherein the initial state includes: the reactor being in a hot shutdown state and all of the control rods being in an inserted-rod position.

The detector counting rate determination module 504 is configured to control the second target control rod and each of the remaining control rods to change from the inserted-rod position to a withdrawn-rod position, and acquire a detector counting rate corresponding to the first target control rod being at the inserted-rod position.

The all-rod-out counting rate determination module 506 is configured to control the first target control rod to change to the withdrawn-rod position, and acquire an all-rod-out counting rate of the reactor.

The remaining control rod execution module 508 is configured to perform following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position.

The detector counting rate determination module 504 is further configured to control the second target control rod to change to the inserted-rod position, and acquire a detector counting rate corresponding to the second target control rod being at the inserted-rod position.

The control rod worth determination module 510 is configured to perform statistical analysis on the all-rod-out counting rate and detector counting rates respectively corresponding to the control rods, to determine control rod worth of the reactor.

In an embodiment, the detector counting rate determination module is configured to: determine a plurality of power control rods belonging to a power rod group from the second target control rod and the remaining control rods; and for each of the power control rods in the same power rod group, change each of the power control rods from the inserted-rod position to the withdrawn-rod position by an alternately withdrawing overlapping-step manner.

In an embodiment, the detector counting rate determination module is further configured to:
acquire a first counting rate of a source range detector at a current moment and a second counting rate at a historical moment;
in a case where a statistical value from the first counting rate and the second counting rate satisfies a stability condition, determine the first counting rate as the detector counting rate corresponding to the first target control rod being at the inserted-rod position.

In an embodiment, the initial state further includes a core boron concentration of the reactor being within a preset range. In the case of this embodiment, the reactor control apparatus further includes a reactor criticality-reaching test module, configured to: control the second target control rod to change from the inserted-rod position to a regulating rod position, and maintain the first target control rod and each of the remaining control rods in the withdrawn-rod position, wherein the regulating rod position is a state where the control rod is partially inserted; and perform an adjustment step, the adjustment step including: performing boron concentration dilution on the reactor; and after the reactor satisfies a preset dilution-stopping criterion, continuously changing a rod position of the second target control rod along a direction from the regulating rod position to the withdrawn-rod position until the reactor reaches a critical state, and stopping changing the rod position of the second target control rod.

In an embodiment, the reactor control apparatus further includes an adjustment step repetitive execution module, configured to: if the second target control rod has been withdrawn from the regulating rod position to the withdrawn-rod position and the reactor still has not reached the critical state, control the second target control rod to change to the regulating rod position, and repeat the adjustment step until the reactor reaches the critical state.

In an embodiment, the reactor control apparatus further includes a withdrawal and insertion performance determination module, configured to: determine withdrawal and insertion parameters of the control rod that has undergone a rod position change; and perform statistical analysis on each of the withdrawal and insertion parameters of the same control rod, to complete a withdrawal and insertion performance verification test of the control rod.

In an embodiment, a computer device is provided, which can be a terminal, and its internal structural view can be as shown in FIG. 6. The computer device includes a processor, a memory, a communication interface, a display screen, and an input device that are connected through a system bus. The processor of the computer device is configured to provide computing and control capabilities. The memory of the computer device includes a non-volatile storage medium and an internal memory. The non-volatile storage medium stores an operating system and a computer program. The internal memory provides an environment for the operation of the operating system and the computer program in the non-volatile storage medium. The communication interface of the computer device is configured to communicate with an external terminal in a wired or wireless manner. The wireless manner can be implemented through WIFI, a mobile cellular network, Near Field Communication (NFC), or other technologies. The computer program, when executed by the processor, implements a reactor control method. The display screen of the computer device can be a liquid crystal display screen or an electronic ink display screen. The input device of the computer device can be a touch layer covered on the display screen, or can be a key, a trackball, or a touch pad provided on the housing of the computer device, or can further be an external keyboard, touch pad, or mouse, etc.

Those skilled in the art can understand that the structure shown in FIG. 6 is only a block view of a part of the structure related to the solution of the present application, and does not constitute a limitation on the computer device to which the solution of the present application is applied. The computer device can include more or fewer components than those shown in the figure, or combine certain components, or have different component arrangements.

In an embodiment, a computer device is provided, which includes a memory and a processor, the memory having a computer program stored therein, wherein when the processor executes the computer program, steps of the above method are implemented.

In an embodiment, a computer-readable storage medium is provided, having a computer program stored therein; wherein when a processor executes the computer program, steps of the above method are implemented.

In an embodiment, a computer program product is provided, which includes a computer program; wherein when a processor executes the computer program, steps of the above method are implemented.

It should be noted that user information (including but not being limited to user device information, user personal information, etc.) and data (including but not being limited to data for analysis, stored data, displayed data, etc.) involved in the present application are all information and data authorized by the user or fully authorized by all parties.

Those of ordinary skill in the art can understand that all or part of the processes in the methods of the above embodiments can be implemented by instructing relevant hardware through a computer program. The computer program can be stored in a non-volatile computer-readable storage medium. When the computer program is executed, it can include the processes of the methods in the above embodiments. Any reference to a memory, a database, or other media used in the embodiments provided in the present application can include at least one of non-volatile memory or volatile memory. Non-volatile memory can include Read-Only Memory (ROM), magnetic tape, floppy disk, flash memory, optical memory, high-density embedded non-volatile memory, Resistive Random-Access Memory (ReRAM), Magnetoresistive Random Access Memory (MRAM), Ferroelectric Random-Access Memory (FRAM), Phase Change Memory (PCM), graphene memory, etc. Volatile memory can include Random Access Memory (RAM) or external cache memory, etc. By way of illustration and not limitation, RAM can take multiple forms, such as Static Random-Access Memory (SRAM) or Dynamic Random-Access Memory (DRAM), etc. The databases involved in the embodiments provided in the present application can include at least one of a relational database or a non-relational database. Non-relational databases can include blockchain-based distributed databases, etc., but are not limited thereto. The processors involved in the embodiments provided in the present application can be general-purpose processors, central processing units, graphics processing units, digital signal processors, programmable logic controllers, data processing logic controllers based on quantum computing, etc., but are not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A reactor control method, comprising:
in an initial state, selecting from all control rods of a reactor, a first target control rod, a second target control rod, and remaining control rods other than the first target control rod and the second target control rod, wherein the initial state comprises the reactor being in a hot shutdown state and all of the control rods being in an inserted-rod position;
controlling the second target control rod and each of the remaining control rods to change from the inserted-rod position to a withdrawn-rod position, and acquiring a detector counting rate corresponding to the first target control rod being at the inserted-rod position;
controlling the first target control rod to change to the withdrawn-rod position, and acquiring an all-rod-out counting rate of the reactor;
performing following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position;
controlling the second target control rod to change to the inserted-rod position, and acquiring a detector counting rate corresponding to the second target control rod being at the inserted-rod position; and
performing statistical analysis on the all-rod-out counting rate and detector counting rates respectively corresponding to the control rods, to determine control rod worth of the reactor.

2. The method according to claim 1, wherein controlling the second target control rod and each of the remaining control rods to change from the inserted-rod position to the withdrawn-rod position comprises:
determining a plurality of power control rods belonging to a power rod group from the second target control rod and the remaining control rods; and
for each of the power control rods in a same power rod group, changing each of the power control rods from the inserted-rod position to the withdrawn-rod position by an alternately withdrawing overlapping-step manner.

3. The method according to claim 1, wherein acquiring the detector counting rate corresponding to the first target control rod being at the inserted-rod position comprises:
acquiring a first counting rate of a source range detector at a current moment and a second counting rate at a historical moment; and
in a case where a statistical value from the first counting rate and the second counting rate satisfies a stability condition, determining the first counting rate as the detector counting rate corresponding to the first target control rod being at the inserted-rod position.

4. The method according to claim 1, wherein the initial state further comprises a core boron concentration of the reactor being within a preset range, and the method further comprises:
controlling the second target control rod to change from the inserted-rod position to a regulating rod position, and maintaining the first target control rod and each of the remaining control rods in the withdrawn-rod position, wherein the regulating rod position is a state where the control rod is partially inserted; and
performing an adjustment step, the adjustment step comprising: performing boron concentration dilution on the reactor; and after the reactor satisfies a preset dilution-stopping criterion, continuously changing a rod position of the second target control rod along a direction from the regulating rod position to the withdrawn-rod position until the reactor reaches a critical state, and stopping changing the rod position of the second target control rod.

5. The method according to claim 4, wherein the method further comprises: if the second target control rod has been withdrawn from the regulating rod position to the withdrawn-rod position and the reactor still has not reached the critical state, controlling the second target control rod to change to the regulating rod position, and repeating the adjustment step until the reactor reaches the critical state.

6. The method according to any one of claims 1 to 5, further comprising:
determining withdrawal and insertion parameters of the control rod that has undergone a rod position change; and
performing statistical analysis on each of the withdrawal and insertion parameters of a same control rod, to complete a withdrawal and insertion performance verification test of the control rod.

7. A reactor control apparatus, comprising:
a control rod selection module, configured to: in an initial state, select from all control rods of a reactor, a first target control rod, a second target control rod, and remaining control rods other than the first target control rod and the second target control rod; wherein the initial state comprises: the reactor being in a hot shutdown state and all of the control rods being in an inserted-rod position;
a detector counting rate determination module, configured to control the second target control rod and each of the remaining control rods to change from the inserted-rod position to a withdrawn-rod position, and acquire a detector counting rate corresponding to the first target control rod being at the inserted-rod position;
an all-rod-out counting rate determination module, configured to control the first target control rod to change to the withdrawn-rod position, and acquire an all-rod-out counting rate of the reactor;
a remaining control rod execution module, configured to perform following steps on each of the remaining control rods: controlling the remaining control rod to change to the inserted-rod position, acquiring a detector counting rate corresponding to the remaining control rod being at the inserted-rod position, and controlling the remaining control rod to change from the inserted-rod position to the withdrawn-rod position;
the detector counting rate determination module, further configured to control the second target control rod to change to the inserted-rod position, and acquire a detector counting rate corresponding to the second target control rod being at the inserted-rod position; and
a control rod worth determination module, configured to perform statistical analysis on the all-rod-out counting rate and detector counting rates respectively corresponding to the control rods, to determine control rod worth of the reactor.

8. The apparatus according to claim 7, wherein the detector counting rate determination module is configured to:
determine a plurality of power control rods belonging to a power rod group from the second target control rod and the remaining control rods; and
for each of the power control rods in a same power rod group, change each of the power control rods from the inserted-rod position to the withdrawn-rod position by an alternately withdrawing overlapping-step manner.

9. The apparatus according to claim 7, wherein the detector counting rate determination module is further configured to:
acquire a first counting rate of a source range detector at a current moment and a second counting rate at a historical moment; and
in a case where a statistical value from the first counting rate and the second counting rate satisfies a stability condition, determine the first counting rate as the detector counting rate corresponding to the first target control rod being at the inserted-rod position.

10. The apparatus according to claim 7, wherein the initial state further comprises a core boron concentration of the reactor being within a preset range, and
the apparatus further comprises a reactor criticality-reaching test module, configured to:
control the second target control rod to change from the inserted-rod position to a regulating rod position, and maintain the first target control rod and each of the remaining control rods in the withdrawn-rod position, wherein the regulating rod position is a state where the control rod is partially inserted; and
perform an adjustment step, the adjustment step comprising: performing boron concentration dilution on the reactor; and after the reactor satisfies a preset dilution-stopping criterion, continuously changing a rod position of the second target control rod along a direction from the regulating rod position to the withdrawn-rod position until the reactor reaches a critical state, and stopping changing the rod position of the second target control rod.

11. The apparatus according to claim 10, further comprising an adjustment step repetitive execution module, configured to:
if the second target control rod has been withdrawn from the regulating rod position to the withdrawn-rod position and the reactor still has not reached the critical state, control the second target control rod to change to the regulating rod position, and repeat the adjustment step until the reactor reaches the critical state.

12. The apparatus according to any one of claims 7 to 11, further comprising a withdrawal and insertion performance determination module, configured to:
determine withdrawal and insertion parameters of the control rod that has undergone a rod position change; and
perform statistical analysis on each of the withdrawal and insertion parameters of a same control rod, to complete a withdrawal and insertion performance verification test of the control rod.

13. A computer device, comprising a memory and a processor, the memory having a computer program stored therein, wherein when the processor executes the computer program, steps of the method according to any one of claims 1 to 6 are implemented.

14. A computer-readable storage medium, having a computer program stored therein, wherein when a processor executes the computer program, steps of the method according to any one of claims 1 to 6 are implemented.

15. A computer program product, comprising a computer program, wherein when a processor executes the computer program, steps of the method according to any one of claims 1 to 6 are implemented.
